(19) Europäisches Patentamt
European Patent Office
Office européen des brevets

(11) **EP 4 184 394 A1**

(12) **EUROPEAN PATENT APPLICATION**

(43) Date of publication:
**24.05.2023 Bulletin 2023/21**

(21) Application number: **22191623.2**

(22) Date of filing: **23.08.2022**

(51) International Patent Classification (IPC):
**G06N 3/063** (2023.01)   **G06N 3/045** (2023.01)
**G06N 3/0464** (2023.01)   **G06N 3/082** (2023.01)

(52) Cooperative Patent Classification (CPC):
**G06N 3/063; G06N 3/045; G06N 3/0464;
G06N 3/082**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.11.2021   US 202163281068 P
14.01.2022   US 202217576914**

(71) Applicant: **Samsung Electronics Co., Ltd.
Gyeonggi-do, 16677 (KR)**

(72) Inventors:
• **FANG, Jun
San Jose, CA 95134 (US)**
• **YANG, Li
San Jose, CA 95134 (US)**
• **THORSLEY, David
San Jose, CA 95134 (US)**
• **HASSOUN, Joseph H.
San Jose, CA 95134 (US)**

(74) Representative: **Kuhnen & Wacker
Patent- und Rechtsanwaltsbüro PartG mbB
Prinz-Ludwig-Straße 40A
85354 Freising (DE)**

(54) **CREATING AN ACCURATE LATENCY LOOKUP TABLE FOR NPU**

(57)   A system and a method are disclosed for estimating a latency of a layer of a neural network. A host processing device adds an auxiliary layer to a selected layer of the neural network. A neural processing unit executes an inference operation over the selected layer and the auxiliary layer. A total latency is measured for the inference operation for the selected layer and the auxiliary layer, and an overhead latency is measured for the inference operation. The overhead latency is subtracted from the total latency to generate an estimate of the latency of the layer. In one embodiment, measuring the overhead latency for the inference operation that is associated with the auxiliary layer involves modeling the overhead latency based on a linear regression of an input data size that is input to the selected layer, and an output data size that is output from the auxiliary layer.

FIG. 1

**Description**

TECHNICAL FIELD

The subject matter disclosed herein relates to determining layer latency of a neural network. More particularly, the subject matter disclosed here relates to a system and a method for accurately determining layer latency of a neural network.

BACKGROUND

Many deep neural network applications are intended to be run on edge devices, such as Neural Processing Units (NPUs). Recent studies have shown the importance of model optimization (e.g., Neural Architecture Search) over direct metrics (e.g., latency) instead of indirect metrics (e.g., FLOPs). Platform-specific latency measurements, however, may involve engineering efforts that may be slow and difficult to parallelize.

Billions of neural network architectures may be constructed using combinations of layers of known neural network models. Executing an inference operation of a neural network architecture and recording (i.e., measuring) the latency of all of the possible embodiment variations of the neural network architecture networks may be prohibitively expensive and impractical.

Instead researchers may determine the latency of usually around several hundreds of layers and then create a layer-wise latency lookup table (LUT) for the neural network. Such a table may then be used to quickly estimate the latency of the network by summing-up the latency of each layer in the network by querying the layer-wise latency LUT. Such an approach, however, may include an overhead latency related to data processing that is external to a neural processing unit that is executing an inference operation and data transportation to and from the neural processing unit.

SUMMARY

An example embodiment provides a method to estimate a latency of a layer of a neural network that may include: adding, by a host processing device, an auxiliary layer to a selected layer of the neural network; executing, by a neural processing unit, an inference operation over the selected layer and the auxiliary layer; measuring, by the host processing device, a total latency for the inference operation for the selected layer and the auxiliary layer; measuring, by the host processing device, an overhead latency for the inference operation; and subtracting, by the host processing device, the overhead latency from the total latency to generate an estimate of the latency of the layer. In one embodiment, the auxiliary layer may include an averaging pooling layer, a convolutional Conv1x1 layer, or a convolutional Conv3x3 layer. In another embodiment, the neural processing unit may include a first memory in which the host processing device may be coupled to the neural processing unit and the host processing device may include a second memory, and the overhead latency for the inference operation may include data processing by the host processing device and data transportation between the first memory of the neural processing unit and the second memory of the host processing device to execute the inference operation on the selected layer and the auxiliary layer of the neural network. In still another embodiment, the method may further include repeating a predetermined number of times executing the inference operation over the selected layer and the auxiliary layer, measuring the total latency for the inference operation for the selected layer and the auxiliary layer, and measuring the overhead latency for the inference operation that is associated with the auxiliary layer. In yet another embodiment, measuring the overhead latency for the inference operation that is associated with the auxiliary layer may further include modeling the overhead latency based on a linear regression of an input data size that is input to the selected layer, and an output data size that is output from the auxiliary layer. In one embodiment, measuring the overhead latency for the inference operation that is associated with the auxiliary layer may further include determining an input data size that is input to the selected layer, and an output data size that is output from the auxiliary layer, determining a first value for a first coefficient, a second value for a second coefficient and a third value for an intercept variable using a linear regression model, and determining the overhead latency based on the input data size, the output data size, the first coefficient, the second coefficient and the third value. In another embodiment, the method may further include generating a lookup table containing an estimated latency for at least one layer of the neural network.

An example embodiment provides a method to estimate a latency of a layer of a neural network that may include: adding, by a host processing device, an auxiliary layer to a selected layer of the neural network; executing, by a neural processing unit, an inference operation over the selected layer and the auxiliary layer; measuring, by the host processing device, a total latency for the inference operation for the selected layer and the auxiliary layer; modeling an overhead latency based on a linear regression of an input data size that is input to the selected layer, and an output data size that is output from the auxiliary layer; and subtracting, by the host processing device, the overhead latency from the total latency to generate an estimate of the latency of the layer. In one embodiment, modeling the overhead latency may further include determining a first size of data input to the selected layer, and a second size of data output from the auxiliary layer; determining a first value for a first coefficient, a second value for a second coefficient and a third value for an intercept variable using a linear regression model; and determining the overhead latency based on the first size of data, the second size of data, the first coefficient, the second coefficient and the third value. In another embodiment, the auxiliary layer may include a convolutional Conv1x1 layer. In still another embodiment, the neural processing unit may include a first memory, the host processing device may be coupled to the neural processing unit and include a second memory, and the overhead latency for the inference operation may include data processing by the host processing device and data transportation between the first memory of the neural processing unit and the second memory of the host processing device to execute the inference operation on the selected layer and the auxiliary layer of the neural network. In yet another embodiment, the method may further include repeating a predetermined number of times executing the inference operation over the selected layer and the auxiliary layer, measuring the total latency for the inference operation for the selected layer and the auxiliary layer, and measuring the overhead latency for the inference operation that is associated with the auxiliary layer.

An example embodiment provides a system to estimate a latency of a layer of a neural network that may include a neural processing circuit and a host computing device. The neural processing circuit may include a first memory. The host computing device may include a second memory, and the host computing device may be configured to control the neural processing circuit to add an auxiliary layer to a selected layer of the neural network and execute an inference operation over the selected layer and the auxiliary layer. The host computing device may be further configured to measure a total latency for the inference operation for the selected layer and the auxiliary layer, measure an overhead latency for the inference operation, and subtract the overhead latency from the total latency to generate an estimate of the latency of the layer. In one embodiment, the auxiliary layer may include an averaging pooling layer, a convolutional Conv1x1 layer, or a convolutional Conv3x3 layer. In another embodiment, the overhead latency for the inference operation may include data processing by the host computing device and data transportation between the first memory of the neural processing circuit and the second memory of the host computing device to execute the inference operation on the selected layer and the auxiliary layer of the neural network. In still another embodiment, the host computing device may be further configured to control the neural processing circuit to repeat a predetermined number of times executing the inference operation over the selected layer and the auxiliary layer, and may be further configured to repeat the predetermined number of times measuring the total latency for the inference operation for the selected layer and the auxiliary layer, and to measure the overhead latency for the inference operation that is associated with the auxiliary layer. In yet another embodiment, the host computing device may be further configured to model the overhead latency based on a linear regression of an input data size that is input to the selected layer, and an output data size that is output from the auxiliary layer. In one embodiment, the host computing device may be further configured to determine an input data size that is input to the selected layer, and an output data size that is output from the auxiliary layer, determine a first value for a first coefficient, a second value for a second coefficient and a third value for an intercept variable using a linear regression model; and determine the overhead latency based on the input data size, the output data size, the first coefficient, the second coefficient and the third value. In another embodiment, the host computing device may be further configured to generate a lookup table containing an estimated latency for at least one layer of the neural network.

BRIEF DESCRIPTION OF THE DRAWING

In the following section, the aspects of the subject matter disclosed herein will be described with reference to exemplary embodiments illustrated in the figure, in which:

> FIG. 1 depicts a system to accurately estimate the latency of a layer of a neural network according to the subject matter disclosed herein;
> FIG. 2 is a flowchart of an example embodiment of a method to accurately estimate the latency of a layer of a neural network according to the subject matter disclosed herein;
> FIG. 3 is a flowchart of an example embodiment of a method to accurately estimate the latency of a layer of a neural network according to the subject matter disclosed herein; and
> FIG. 4 depicts an electronic device that includes the capability of measuring latency of a layer of a neural network according to the subject matter disclosed herein.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

In order to obtain fast and reliable latency estimations of neural network architectures, regardless of how massive the neural network architecture may be, the subject matter disclosed herein provides two technique for generating accurate latency estimates of all layers of a neural network by using an auxiliary layer that may be added to the neural network as part of the estimate process. The auxiliary layer may be used to accurately estimate overhead latency associated with data processing and data transportation to a neural processing unit that is executing an inference operation. The estimates that are generated using the techniques disclosed herein may be added to a latency lookup table. One example embodiment of the method disclosed herein uses a regression model to provide even more accurate latency estimate. The techniques disclosed herein may be used on, for example, a CPU or a GPU, and achieves accurate estimations for the network latency in terms of having a small root-mean-square error ($RMSE$) between the measured latency and estimated latency.

In one embodiment, the subject matter disclosed herein models overhead latency and excludes the overhead latency from the overall latency of a layer of a neural network. A first method disclosed herein adds an auxiliary layer to a selected neural network layer and uses the auxiliary layer to model overhead latency. The overhead latency is then excluded from a total latency of the combination of selected layer and the auxiliary layer in order to accurately estimate the latency of the selected layer. A second method disclosed herein uses a regression model to more accurately estimate the overhead latency as a linear function of the input data size and output data size.

It should be understood that the methods disclosed herein for estimating latency of a layer of a neural network may be used with any neural network architecture and is not limited to a "Once-for-All" neural network architecture.

A seemingly straightforward method to estimate latency of a neural network layer may not work well on an neural processing unit (NPU) because the measured latency for each layer may include a significant overhead latency. NPUs are typically custom-designed to accelerate deep neural networks (DNNs) and the latency of an individual layer processed by an NPU may include an overhead latency that may involve (1) data pre-processing and post-processing on a host processor, (2) data transportation between dynamic random access memory (DRAM) in the host processor and static RAM (SRAM) in the NPU; and (3) execution of a layer in the NPU. The latency associated with the execution of a layer in the NPU is the actual latency that is desired for a latency LUT. The subject matter disclosed herein excludes the overhead latency associated with the individual layers of the neural network.

Consider a process of generating a layer-wise latency lookup table on an NPU for all possible layers in, for example, a "Once-for-All" neural network. A seemingly straightforward way to obtain the latency $Lat_{layer\,i}$ for each layer $i$ of the "Once-for-All" neural network might be to convert each layer to be an individual network, and then execute the inference of the neural network on an NPU for, for example, 500 times while recording the latency $Lat_{ix}$ for the layer $i$ for each iteration x. A median latency of the example 500 iterations may be determined and used to represent the latency of the layer $i$. That is,

$$Lat_{layer\,i} = median(Lat_{i1}, Lat_{i2}, Lat_{i3}, \ldots, Lat_{i500}). \qquad (1)$$

A layer-wise latency lookup table may then be generated using the proposed process. An example schema for such a latency LUT may be

$$\text{Latency LUT} = \{Layer_i: Lat_{layer\,i}\}. \qquad (2)$$

To verify whether the latency LUT is sufficiently accurate for the seemingly straightforward process, several sub-networks $Net_j, j = 1, \ldots, m$, may be sampled from the example "Once-for-All" network, and a root-mean-square error ($RMSE$) may be calculated between a measured latency ($Meas_{Lat\,Net\,j}$) for a sub-network and a predicted latency ($Pred\,Lat_{Net\,j}$) from the latency LUT for the sampled networks. The $RMSE$ may be calculated as

$$RMSE = \sqrt{mean\left(Meas_{Lat\,Net\,j} - Pred\,Lat_{Net\,j}\right)^2} \qquad (3)$$

in which $Meas_{Lat\,Net\,j}$ is the median of the measured executed latency of the sub-network $j$ on the NPU for the numerous measurement iterations, and the predicted latency $Pred\,Lat_{Net\,j}$ may be obtained from the latency LUT.

That is, for each sub-network $Net_j$, the latency may be obtained for each layer $i$ from the latency LUT, and the latency of $Net_j$ may be predicted by summing the latencies of all the layers $i$ in the $Net_j$ as:

$$Pred_{Lat\,Net\,j} = \sum_i Lat_{Layer\,i} \; for\; all\; layers\; i\; in\; Net\, j. \qquad (4)$$

It may be found that there is a large overhead associated with the predicted latency, as shown in Table 1 below. In particular, Table 1 shows measured and predicted latencies for three example sub-networks having varying depths d = 2, 3 and 4, varying width expansion ratios e = 3, 4 and 6, and varying kernel sizes k = 3, 5 and 7. There were a total of 3x3x3 = 27 example sub-networks. The latencies for the three example sub-networks of the "Once-for-All" neural network shown in Table 1 are in milliseconds (ms).

Table 1. Seemingly Straightforward Determination of a Latency LUT

| Network | Measured Latency | Predicted Latency |
|---|---|---|
| ofa_mbv3_d2_e3_k3 | 2.348 | 13.929 |
| ofa_mbv3_d3_e4_k5 | 3.231 | 14.480 |
| ofa_mbv3_d4_e6_k7 | 5.832 | 15.347 |

Therefore, the seemingly straightforward way to create a latency LUT may not be accurate because an overhead latency may be included in the predicted latency values.

According to the subject matter disclosed herein, a first method involves adding an auxiliary layer to a layer of a neural network that is then used to exclude an overhead latency and provide an accurate latency for the layer. A second method involves using a regression model to estimate the overhead latency, which is then excluded from the estimated latency overhead to provide an even more accurate latency estimate for a neural network layer.

Both the first and the second method disclosed herein define the NPU layer Execution Latency (E) to equal the True (or actual) Layer Latency (T) plus the Overhead Latency (O). In other words,

$$E = T + O. \tag{5}$$

In the first method disclosed herein, an auxiliary layer, such as a Pooling (avgPool) layer, a convolutional Conv1x1 layer, or a convolutional Conv3x3 layer, may be added on top of a current layer. That is, an auxiliary layer may be added preceding the current layer. The latency may then be determined for the combination of the layer and auxiliary layer, and separately for the auxiliary layer. The measured execution latency for the combination of the layer and the auxiliary layer is:

$$E(layer + aux\ layer) = T + A + O. \tag{6}$$

The measured execution latency for the auxiliary layer is:

$$E(aux\ layer) = A + O. \tag{7}$$

Then, the true (or actual) latency for the layer is:

$$T = E(layer + aux\ layer) - E(aux\ layer) = (T + A + O) - (A + O). \tag{8}$$

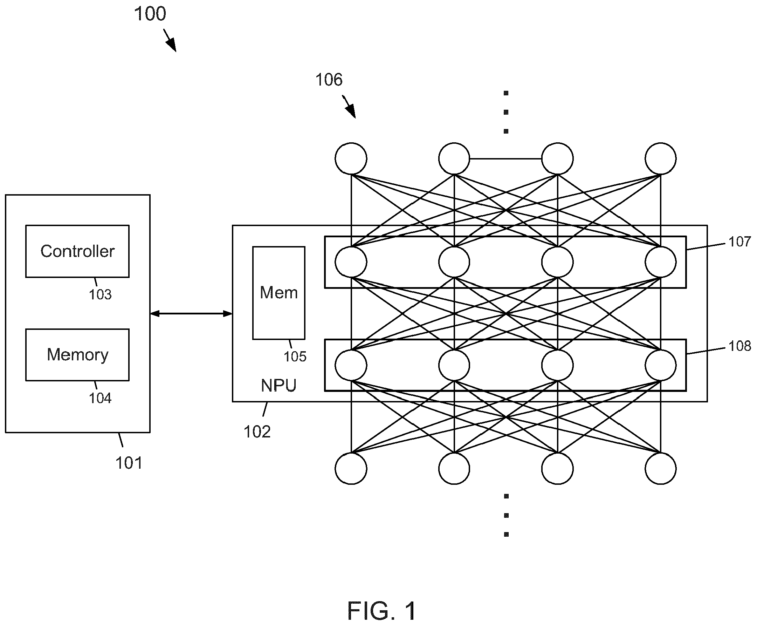

FIG. 1 depicts a system 100 to accurately estimate the latency of a layer of a neural network according to the subject matter disclosed herein. The system 100 may include a host processing device 101 and a neural processing unit 102. The host processing device 101 may include a processor 103 and a memory 104. In one embodiment, the memory 104 may include DRAM. The neural processing unit 102 may include a memory 105, and multipliers, adder trees and accumulators that are not shown. The various components forming the host processing device 101 and the neural processing unit 102 may be modules that may be embodied as a software package, code and/or instruction set or instructions, as an assembly, hardwired circuitry, programmable circuitry, state machine circuitry, and/or firmware that stores instructions executed by programmable circuitry.

The host processing device 101 may configure the neural processing unit 102 to execute an inference on a neural network architecture 106 having multiple layers. Latency of a selected layer 107 may be estimated by the host processing device 101 configuring the neural network architecture to include an auxiliary layer 108. The auxiliary layer 108 may be a Pooling (avgPool) layer, a convolutional Conv1x1 layer, or a convolutional Conv3x3 layer.

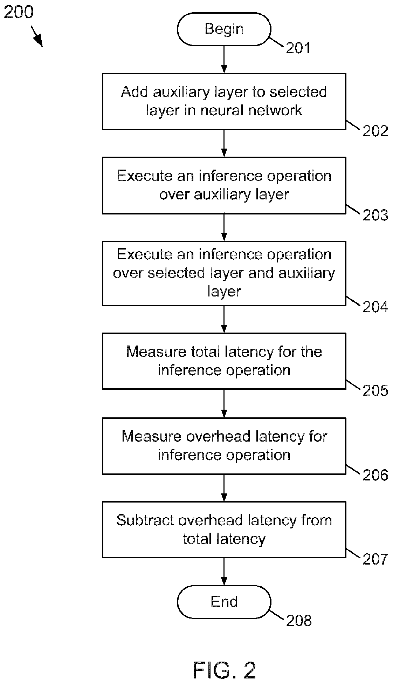

FIG. 2 is a flowchart of an example embodiment of a method 200 to accurately estimate the latency of a layer of a neural network according to the subject matter disclosed herein. The method 200 begins at 201. At 202, an auxiliary layer is added to a selected layer in the neural network. In one embodiment, a host processing device configures the neural network to include the auxiliary layer. At 203, a neural processing unit executes an inference operation through only the auxiliary layer and the latency for the auxiliary layer is measured. At 204, a neural processing unit executes an inference operation through the selected layer and the auxiliary layer. At 205, the total latency for executing the inference operation through the selected layer and the auxiliary layer is measured. At 206, the overhead latency is determined, or measured. At 207, the overhead latency measured at 206 is subtracted from the total latency measured at 205 to obtain the true, or actual, latency for the layer. The true latency for the layer may then be entered into a latency table for the neural network. The method ends at 208.

By using the first method with an auxiliary layer Conv1x1, the true latency may be determined by excluding the execution latency of the auxiliary layer and the overhead. Table 2 below shows an improved latency LUT in which predicted latencies for same three sub-networks of Table 1 are determined based on excluding the execution latency of the auxiliary layer and the overhead. The predicted latencies in Table 2 are much closer to the measured latency for the three sub-networks.

Table 2. Latency LUT determined using the Method 1.

| Network | Measured | Predicted | Difference |
|---|---|---|---|
| ofa_mbv3_d2_e3_k3 | 2.348 | 2.473 | 0.125 |
| ofa_mbv3_d3_e4_k5 | 3.231 | 2.468 | 0.237 |
| ofa_mbv3_d4_e6_k7 | 5.832 | 6.233 | 0.401 |

A *RMSE* calculated based on the measured latency from executing the 27 sub-networks and the predicted latency from the layer-wise latency LUT was found to be $RMSE_{27\ Nets}$ = 0.294 *ms.*

To provide an even more accurate estimate of latency of a layer of an neural network, the second method disclosed herein models the overhead latency as a linear regression problem. As previously mentioned, the overhead latency comes from the pre- and post-processing of the data, and the data transportation between DRAM in the host processor and SRAM in the NPU. These two overheads linearly correlate to the input and output data size.

In order to linearly model the latency overhead, the latency for execution of a layer on NPU should be linearly proportional to the layer computational complexity, as measured in Floating Point Operations per second (FLOPs). Additionally, the NPU may be optimally designed for accelerating convolutional layers with general kernel sizes, such as 3x3, so a Conv1x1 may be used to keep the linearity of the latency based on Conv1x1 FLOPs.

The execution latency of a Conv1x1 layer may be assumed to be linearly proportional to the input size, output size and the Conv 1×1 FLOPs.

$$Latency = a \times input\_size + b \times output\_size + c \times Conv1x1_{Flops} + d. \quad (9)$$

For this linear regression model, the overhead is

$$Overhead = a \times input\_size + b \times output\_size + d. \qquad (10)$$

Having the input size and output size of each layer in the latency LUT, and given the values of the coefficients of $\alpha$, *b* and the intercept d, the overhead latency may be estimated using Eq. (10), which then may be excluded from the latency LUT.

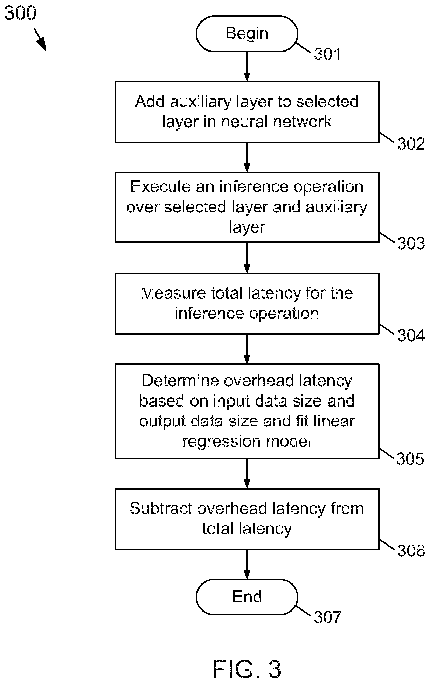

FIG. 3 is a flowchart of an example embodiment of a method 300 to accurately estimate the latency of a layer of a neural network according to the subject matter disclosed herein. The method 300 begins at 301. At 302, an auxiliary layer is added to a selected layer in the neural network. In one embodiment, a host processing device configures the neural network to include the auxiliary layer. At 303, a neural processing unit executes an inference operation through the selected layer and the auxiliary layer. At 304, the total latency for executing the inference operation through the selected layer and the auxiliary layer is measured. At 305, the overhead latency is determined based on fitting a linear regression model based on an input data size and an output data size. At 306, the overhead latency is subtracted from the total latency measured at 304 to obtain the true, or actual, latency for the layer. The true latency for the layer may then be entered into a latency table for the neural network. The method ends at 307.

It should be understood that both of the first and second methods disclosed herein for estimating latency of a layer of a neural network may be used with any neural network architecture and is not limited to a "Once-for-All" neural network architecture.

To obtain the values of $a$, b and d from the linear regression, the following example measurements were used. Each of the input sizes $(H \times W \times C_{in})$ of the "Once-for-All" network was input into a Conv1x1 layer with different output channel sizes $C_{out}$ equal to 32, 64, 128, 256 and 512.

$$\text{Input size } (H \times W \times C_{in}) \rightarrow \text{Conv1x1} \rightarrow \text{Output size } (H \times W \times C_{out}). \quad (11)$$

The Conv1x1 layers were executed, for example, 500 times and the median latency was recorded as the target latency. Based on the experimentally measured data, the linear regression model was fitted and the coefficients $a$ and b, and the intercept d were found to be: $a = 1.449 \times 10^{-06}$; $b = 4.154 \times 10^{-07}$; and d = 0.7067.

The *RMSE* between the latency predicted from linear regression model and the measured latency for the Conv1x1 layer was 0.0361.

Having the values for $a$, b and d, the latency LUT of Table 2 was updated by excluding the overhead latency determined by the linear formula, and the predicted latency of sub-networks was recalculated based on the updated LUT, as shown in Table 3 below. The *RMSE* for the 27 sub-networks is $RMSE_{27\ Nets} = 0.5215$.

Table 3. Latency LUT determined using Method 2.

| Network | Measured | Predicted | Difference |
|---|---|---|---|
| ofa_mbv3_d2_e3_k3 | 2.348 | 2.754 | 0.406 |
| ofa_mbv3_d3_e4_k5 | 3.231 | 3.844 | 0.513 |
| ofa_mbv3_d4_e6_k7 | 5.832 | 6.366 | 0.534 |

If, however, two segments of the linear regression model are used, the latency overhead may be estimated more accurately. The two segments are latency < 1.0 ms and latency $\geq$ 1.0 ms. In another embodiment, latency may be measured in different units, such as, but not limited to microseconds. For latency < 1.0: $a$ , b and respectively equal $2.006 \times 10^{-06}$, $5.426 \times 10^{-07}$ and 0.6973. The fitted R$^2$ score = 0.9846, and the $RMSE_{LinearReg}$ = 0.0090 s.

For latency $\geq$ 1.0: $a$, b and d respectively equal $8.699 \times 10^{-07}$, $3.675 \times 10^{-07}$ and 0.8720. The fitted R$^2$ score equals 0.9693, and the $RMSE_{LinearReg}$ = 0.0193.

The latency LUT may be updated by excluding the overhead using two segments of the linear formula and recalculating the predicted latency of sub-networks. Table 4 shows an updated LUT based on using two segments of the linear formula. The $RMSE_{LinearReg}$ = 0.076.

Table 4. Latency LUT determined using segmented Method 2.

| Network | Measured | Predicted | Difference |
|---|---|---|---|
| ofa_mbv3_d2_e3_k3 | 2.348 | 2.384 | 0.036 |
| ofa_mbv3_d3_e4_k5 | 3.231 | 3.296 | 0.065 |
| ofa_mbv3_d4_e6_k7 | 5.832 | 5.597 | 0.235 |

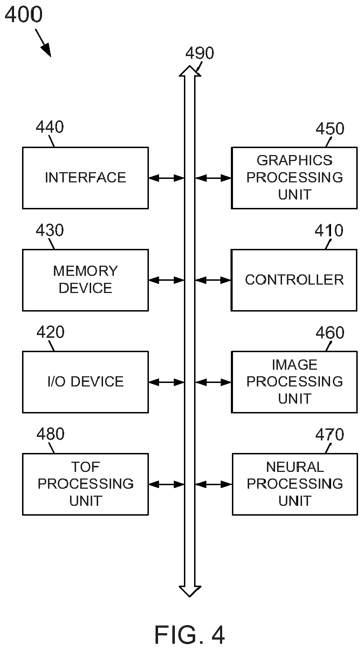

FIG. 4 depicts an electronic device 400 that includes the capability of measuring latency of a layer of a neural network according to the subject matter disclosed herein. The electronic device 400 may include a controller (or CPU) 410, an input/output device 420 such as, but not limited to, a keypad, a keyboard, a display, a touch-screen display, a 2D image sensor, a 3D image sensor, a memory 430, an interface 440, a GPU 450, an imaging-processing unit 460, a neural processing unit 470, a TOF processing unit 480 that are coupled to each other through a bus 490. The controller 410 may include, for example, at least one microprocessor, at least one digital signal processor, at least one microcontroller, or the like. The memory 430 may be configured to store a command code to be used by the controller 410 and/or to store a user data. In one embodiment, the controller 410 may configure and control the neural processing unit 470 to measure latency of a layer of a neural network according to the subject matter disclosed herein.

Electronic device 400 and the various system components of electronic device 400 may be formed from one or modules. The interface 440 may be configured to include a wireless interface that is configured to transmit data to or receive data from, for example, a wireless communication network using a RF signal. The wireless interface 440 may include, for example, an antenna. The electronic system 400 also may be used in a communication interface protocol of a communication system, such as, but not limited to, Code Division Multiple Access (CDMA), Global System for Mobile Communications (GSM), North American Digital Communications (NADC), Extended Time Division Multiple Access (E-TDMA), Wideband CDMA (WCDMA), CDMA2000, Wi-Fi, Municipal Wi-Fi (Muni Wi-Fi), Bluetooth, Digital Enhanced Cordless Telecommunications (DECT), Wireless Universal Serial Bus (Wireless USB), Fast low-latency access with seamless handoff Orthogonal Frequency Division Multiplexing (Flash-OFDM), IEEE 802.20, General Packet Radio Service (GPRS), iBurst, Wireless Broadband (WiBro), WiMAX, WiMAX-Advanced, Universal Mobile Telecommunication Service - Time Division Duplex (UMTS-TDD), High Speed Packet Access (HSPA), Evolution Data Optimized (EVDO), Long Term Evolution - Advanced (LTE-Advanced), Multichannel Multipoint Distribution Service (MMDS), Fifth-Generation Wireless (5G), Sixth-Generation Wireless (6G), and so forth.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

**1.** A method to estimate a latency of a layer of a neural network, the method comprising:

adding, by a host processing device, an auxiliary layer to a selected layer of the neural network;
executing, by a neural processing unit, an inference operation over the selected layer and the auxiliary layer;
measuring, by the host processing device, a total latency for the inference operation for the selected layer and the auxiliary layer;
measuring, by the host processing device, an overhead latency for the inference operation; and
subtracting, by the host processing device, the overhead latency from the total latency to generate an estimate of the latency of the layer.

2. The method of claim 1, wherein the auxiliary layer comprises an averaging pooling layer, a convolutional Conv1x1 layer, or a convolutional Conv3x3 layer.

3. The method of claim 1 or 2, wherein the method further comprises repeating a predetermined number of times executing the inference operation over the selected layer and the auxiliary layer, measuring the total latency for the inference operation for the selected layer and the auxiliary layer, and measuring the overhead latency for the inference operation that is associated with the auxiliary layer.

4. The method of claim 3, wherein measuring the overhead latency for the inference operation that is associated with the auxiliary layer further comprises modeling the overhead latency based on a linear regression of an input data size that is input to the selected layer, and an output data size that is output from the auxiliary layer.

5. The method of claim 3 or 4, wherein measuring the overhead latency for the inference operation that is associated with the auxiliary layer further comprises:

   determining an input data size that is input to the selected layer, and an output data size that is output from the auxiliary layer;
   determining a first value for a first coefficient, a second value for a second coefficient and a third value for an intercept variable using a linear regression model; and
   determining the overhead latency based on the input data size, the output data size, the first coefficient, the second coefficient and the third value.

6. The method of any one of the previous claims, further comprising generating a lookup table containing an estimated latency for at least one layer of the neural network.

7. A method to estimate a latency of a layer of a neural network, the method comprising:

   adding, by a host processing device, an auxiliary layer to a selected layer of the neural network;
   executing, by a neural processing unit, an inference operation over the selected layer and the auxiliary layer;
   measuring, by the host processing device, a total latency for the inference operation for the selected layer and the auxiliary layer;
   modeling an overhead latency based on a linear regression of an input data size that is input to the selected layer, and an output data size that is output from the auxiliary layer; and
   subtracting, by the host processing device, the overhead latency from the total latency to generate an estimate of the latency of the layer.

8. The method of claim 7, wherein modeling the overhead latency further comprises:

   determining a first size of data input to the selected layer, and a second size of data output from the auxiliary layer;
   determining a first value for a first coefficient, a second value for a second coefficient and a third value for an intercept variable using a linear regression model; and
   determining the overhead latency based on the first size of data, the second size of data, the first coefficient, the second coefficient and the third value.

9. The method of claim 7 or 8, wherein the auxiliary layer comprises a convolutional Conv1×1 layer.

10. The method of any one of claims 7 to 9, further comprising repeating a predetermined number of times executing the inference operation over the selected layer and the auxiliary layer, measuring the total latency for the inference operation for the selected layer and the auxiliary layer, and measuring the overhead latency for the inference operation that is associated with the auxiliary layer.

11. The method of any one of the preceding claims, wherein the neural processing unit comprises a first memory,

wherein the host processing device is coupled to the neural processing unit, the host processing device comprising a second memory, and

wherein the overhead latency for the inference operation includes data processing by the host processing device and data transportation between the first memory of the neural processing unit and the second memory of the host processing device to execute the inference operation on the selected layer and the auxiliary layer of the neural network.

12. A system to estimate a latency of a layer of a neural network, the system comprising:

a neural processing circuit comprising a first memory; and

a host computing device comprising a second memory, the host computing device configured to control the neural processing circuit to add an auxiliary layer to a selected layer of the neural network and execute an inference operation over the selected layer and the auxiliary layer, the host computing device further configured to measure a total latency for the inference operation for the selected layer and the auxiliary layer, measure an overhead latency for the inference operation, and subtract the overhead latency from the total latency to generate an estimate of the latency of the layer.

13. The system of claim 12, wherein the auxiliary layer comprises an averaging pooling layer, a convolutional Conv1x1 layer, or a convolutional Conv3x3 layer.

14. The system of claim 12 or 13, wherein the overhead latency for the inference operation includes data processing by the host computing device and data transportation between the first memory of the neural processing circuit and the second memory of the host computing device to execute the inference operation on the selected layer and the auxiliary layer of the neural network.

15. The system of any one of claims 12 to 14, wherein the host computing device is further configured to control the neural processing circuit to repeat a predetermined number of times executing the inference operation over the selected layer and the auxiliary layer, and is further configured to repeat the predetermined number of times measuring the total latency for the inference operation for the selected layer and the auxiliary layer, and to measure the overhead latency for the inference operation that is associated with the auxiliary layer.

16. The system of any one of claims 12 to 15, wherein the host computing device is further configured to model the overhead latency based on a linear regression of an input data size that is input to the selected layer, and an output data size that is output from the auxiliary layer.

17. The system of any one of claims 12 to 16, wherein the host computing device is further configured to determine an input data size that is input to the selected layer, and an output data size that is output from the auxiliary layer, determine a first value for a first coefficient, a second value for a second coefficient and a third value for an intercept variable using a linear regression model; and determine the overhead latency based on the input data size, the output data size, the first coefficient, the second coefficient and the third value.

18. The system of any one of claims 12 to 17, wherein the host computing device is further configured to generate a lookup table containing an estimated latency for at least one layer of the neural network.

FIG. 1

200

```
        ┌──────────┐
        │  Begin   │──201
        └──────────┘
              │
              ▼
┌──────────────────────────┐
│ Add auxiliary layer to   │
│ selected layer in neural │
│ network                  │──202
└──────────────────────────┘
              │
              ▼
┌──────────────────────────┐
│ Execute an inference     │
│ operation over auxiliary │
│ layer                    │──203
└──────────────────────────┘
              │
              ▼
┌──────────────────────────┐
│ Execute an inference     │
│ operation over selected  │
│ layer and auxiliary      │
│ layer                    │──204
└──────────────────────────┘
              │
              ▼
┌──────────────────────────┐
│ Measure total latency    │
│ for the inference        │
│ operation                │──205
└──────────────────────────┘
              │
              ▼
┌──────────────────────────┐
│ Measure overhead latency │
│ for inference operation  │──206
└──────────────────────────┘
              │
              ▼
┌──────────────────────────┐
│ Subtract overhead        │
│ latency from total       │
│ latency                  │──207
└──────────────────────────┘
              │
              ▼
        ┌──────────┐
        │   End    │──208
        └──────────┘
```

FIG. 2

300

Begin — 301

Add auxiliary layer to selected layer in neural network — 302

Execute an inference operation over selected layer and auxiliary layer — 303

Measure total latency for the inference operation — 304

Determine overhead latency based on input data size and output data size and fit linear regression model — 305

Subtract overhead latency from total latency — 306

End — 307

FIG. 3

FIG. 4

EP 4 184 394 A1

Europäisches
Patentamt

European
Patent Office

Office européen
des brevets

# EUROPEAN SEARCH REPORT

Application Number

EP 22 19 1623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EVGENY PONOMAREV ET AL: "LETI: Latency Estimation Tool and Investigation of Neural Networks inference on Mobile GPU", ARXIV.ORG, CORNELL UNIVERSITY LIBRARY, 201 OLIN LIBRARY CORNELL UNIVERSITY ITHACA, NY 14853, 6 October 2020 (2020-10-06), XP081779699, * page 2 - page 7; table 1 * | 1-18 | INV. G06N3/063 G06N3/045 G06N3/0464 G06N3/082 |

TECHNICAL FIELDS
SEARCHED      (IPC)

G06N

The present search report has been drawn up for all claims

| Place of search | Date of completion of the search | Examiner |
|---|---|---|
| The Hague | 8 February 2023 | Falco, Gabriele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)